# EUROPEAN PATENT SPECIFICATION

(11) **EP 1 242 209 B1**
(45) Date of publication and mention of the grant of the patent: **29.06.2005**
(21) Application number: 00957188.6
(22) Date of filing: 22.08.2000
(51) Int. Cl.: B23K 9/04, B23K 35/30, B23K 35/32

(54) **HARD METAL COATING**
HARTMETALBESCHICHTUNG
REVETEMENT EN METAL DUR

(30) Priority: 18.10.1999 SE 9903726
(43) Date of publication of application: 25.09.2002
(73) Proprietor: Optiweld AB, 713 72 Gyttorp (SE)
(72) Inventor: GUSTAVSEN, Steinar, S-713 31 Nora (SE)
(74) Representative: Axelsson, Rolf
(86) International application number: PCT/SE2000/001602
(87) International publication number: WO 2001/028729

(56) References cited:
- EP-A1- 0 972 606
- GB-A- 2 257 075
- US-A- 5 051 112
- US-A- 5 492 186

## Description

The present invention relates generally to coating, and specifically to hard metal coating.

### BACKGROUND

It has long been desired to be able to coat carbon steel with hard metal, since hard metal is much more durable than carbon steel but more expensive than carbon steel. With a base of carbon steel and a surface of hard metal a reasonably inexpensive work piece with a durable surface is achieved.

Present solutions for achieving a hard metal surface are e.g. to solder specially treated hard metal material to a work piece, or to weld with special electrodes, such as crushed hard metal moulded in nickel. A special electrode is disclosed in US 5 051 112.

The different solutions have different problems. A soldered coating has lower endurance to heating than a welded coating, whereby a work piece with soldered coating withstands high working temperature less than a welded coating. Welding with a special electrode is expensive since such electrodes are expensive per se (to purchase), and further a special electrode, such as an electrode of crushed hard metal moulded in nickel, achieves a non-homogenous joint of low hardness.

### SUMMARY OF THE INVENTION

An object of the present invention is to provide a hard metal coating, which overcomes the above-mentioned disadvantages.

This object is achieved by a method as claimed in claim 1.

According to an aspect of the present invention a hard metal rod, preferably a drill or mill blank, is applied to a work piece and heated to partly transform the hard metal rod into the work piece and thereby achieving a durable hard metal surface in an inexpensive way.

Further features and advantages of the present invention will be evident from the following description.

### BRIEF DESCRIPTION OF THE DRAWING

The present invention will become more fully understood from the detailed description of embodiment of the present invention given below and the accompanying figure, which is given by way of illustration only, and thus are not limitative of the present invention, wherein:

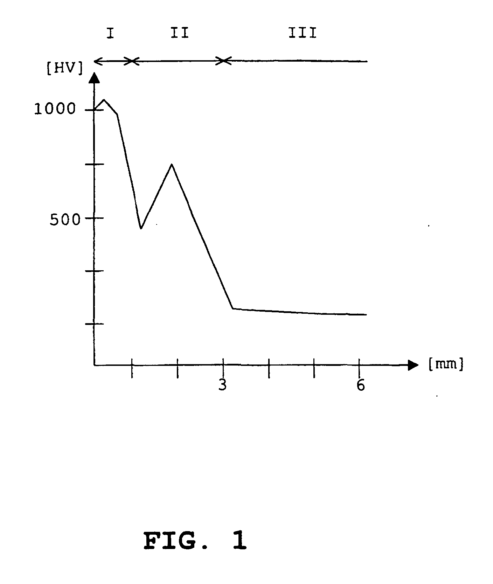

Fig. 1 schematically depicts degree of hardness at increasing depth in a hard-metal coated work piece.

### DETAILED DESCRIPTION OF EMBODIMENT

In the following description, for purpose of explanation and not limitation, specific details are set fourth, such as particular techniques and applications in order to provide a thorough understanding of the present invention. However, it will be apparent to one skilled in the art that the present invention may be practiced in other embodiment that depart from these specific details. In other instances, detailed descriptions of well-known methods and apparatuses are omitted so as not to obscure the description of the present invention with unnecessary details.

An embodiment of the present invention will now be described. A debarking tool made of carbon steel has a cutting edge that after about 16 hours use in a barking machine needs to be recoated or the whole tool needs to be exchanged.

The debarking tool is preferably preheated to about 200-250 °C. The preheating is mainly dependent on the amount of carbon in the carbon steel, which the debarking tool is manufactured of. A hard metal rod, comprising tungsten carbide, which preferably is a drill or mill blank, is applied to the cutting edge of the debarking tool. The hard metal rod is heated to about 1500-1600 °C, which melts the hard metal rod and coats the cutting edge with a layer of tungsten carbide. The heating is preferably performed by TIG-welding, but may also be performed by plasma welding. The surface of the debarking tool now consists of tungsten carbide.

The coated debarking tool is preferably cooled slowly by wrapping the coated debarking tool in wool, preferably specially treated wool preventing putting the wool on fire. The cooling is performed in dependence on the composition of the carbon steel.

The coated cutting edge is preferably ground to obtain a desired sharpness. The debarking tool with a coated cutting edge of hard metal is still effective after over 200 hours use.

The debarking tool obtains three main layers at the cutting edge. A surface area containing mainly hard metal, i.e. tungsten (WC), a transform area containing mainly tungsten and carbon steel, and the rest containing mainly carbon steel.

For illustration Fig. 1 schematically depicts the hardness against the depth of a carbon steel work piece coated with hard metal, where a rod containing 80% tungsten carbide and 20% cobalt (as binder), was used as hard metal rod. The carbon steel work piece coated with the hard metal mentioned above contains three main layers: I, II and III. The first layer I is the surface layer, which contains mainly tungsten with a hardness of about 1000 HV. The third layer III is the carbon steel work piece, which contains mainly carbon steel with a hardness of about 250 HV. The second layer II, i.e. the transform area, is an area where the carbide has transformed with the carbon in the carbon steel and formed a transient area where the hardness decreases from the layer I to the III. The layer II may have deviations from the decreasing hardness dependent on how smooth the transition is.

Changing the composition of the hard metal rod, i.e. by choice of drill or mill blank, may vary the hardness of the coated debarking tool. The more binder, such as cobalt or nickel, a hard metal rod contains the lower hardness is obtained.

Different blanks may have different grain sizes. It is as mentioned above possible to alternatively heat the hard metal rod by plasma welding. Plasma welding obtains higher temperature than TIG-welding and is preferably utilized with blanks that have large grain sizes, whereas TIG-welding obtains lower temperature and is preferably utilized with blanks that have smaller grain sizes. Another possible method of heating the hard metal rod is to use gas welding.

The method described above achieves a hardness of the surface of the coated work piece of at least 80% of which pure hard metal has, of which was used for coating that work piece.

It has been described above how a debarking tool is coated with hard metal. Another tool that advantageously may be coated with hard metal according to the method above is an axle. Other surfaces that advantageously may be coated with hard metal according to the method above, with the exception that grinding is not necessary, are wearing plate, dipper ladle, and at a excavation machine.

A layer of hard metal on a work piece has a thickness of about 0.5-3 mm. If a thicker layer is desired it is possible to coat the already coated work piece with another layer, obtaining a thicker layer of hard metal on the work piece.

It is further possible to partly coat a work piece, e.g. a string, a spot, or a joint, which still improves the hardness of the surface, but with less hard metal. All wearing, cutting, grinding and crushing surfaces that contains carbon steel may benefit from a hard metal coating. Additionally slide, bearing, and slide bearing surfaces may benefit from a hard metal coating.

It will be obvious that the present invention may be varied in a plurality of ways. Such variations are not to be regarded as departure from the scope of the present invention. All such variations as would be obvious to one skilled in the art are intended to be included within the scope of the appended claims.

## Claims

1. A method for coating a portion of a metal alloy work piece, containing carbon, with hard metal,
**characterized by** the steps of
a) applying a hard metal rod, containing tungsten carbide, to the work piece, wherein the hard metal rod is a drill or mill blank; and
b) heating said hard metal rod to 1300-1800 °C to partly transform with the work piece, obtaining a transform layer and a surface layer, whereby the surface layer contains substantially tungsten and the transform layer contains substantially metal alloy and tungsten.

2. The method as claimed in claim 1, wherein said hard metal is heated to 1400-1700 °C, and preferably to 1500-1600 °C.

3. The method as claimed in claim 1 or 2, wherein the applying step is preceded by a step: preheating the work piece to 50-500 °C.

4. The method as claimed in claim 3, wherein said work piece is preheating to 100-350 °C, and preferably to 200-250 °C.

5. The method as claimed in any of claims 1-4, wherein said heating step is followed by a step: cooling the coated work piece.

6. The method as claimed in claim 5, wherein the cooling is performed by wrapping the coated work piece in wool.

7. The method as claimed in claim 5 or 6, wherein said cooling step is followed by a step: grinding the coated work piece.

8. The method as claimed in any of claims 1-7, wherein the heating is obtained by TIG-welding, plasma welding, or gas welding.

9. The method as claimed in any of claims 1-8, wherein the hard metal rod contains of about 80% tungsten and about 20% cobalt, whereby a hardness degree of at least 900 HV is obtained.

10. The method as claimed in claim 9, wherein a hardness degree of at least 950 Hv is obtained, preferably at least 975 HV, and more preferably at least 1000 HV.

## Patentansprüche

1. Verfahren zur Beschichtung eines Teils eines kohlenstoffhaltigen Metalllegierungswerkstücks mit Hartmetall,
**gekennzeichnet durch** die Schritte
a) des Ansetzens eines Wolframkarbid enthaltenden Hartmetallstabs an das Werkstück, wobei es sich bei dem Hartmetallstab um einen Bohrstückrohling oder Fräsling handelt; sowie
b) des Aufheizens des Hartmetallstabs auf 1300-1800°C zwecks teilweiser Umsetzung mit dem Werkstück unter Erzielung einer Umwandlungsschicht und einer Oberflächenschicht, wodurch die Oberflächenschicht weitgehend Wolfram enthält und die Umwandlungsschicht weitgehend Metalllegierung und Wolfram enthält.

2. Verfahren nach Anspruch 1, wobei das Hartmetall auf 1400-1700°C und vorzugsweise auf 1500-1600°C erhitzt wird.

3. Verfahren nach Anspruch 1 oder 2, wobei dem Ansetzschritt ein Schritt vorhergeht: Vorheizen des Werkstücks auf 50-500°C.

4. Verfahren nach Anspruch 3, wobei das Werkstück auf 100-350°C und vorzugsweise auf 200-250°C vorgeheizt wird.

5. Verfahren nach den Ansprüchen 1-4, wobei dem Aufheizschritt ein Schritt folgt: Abkühlen des beschichteten Werkstücks.

6. Verfahren nach Anspruch 5, wobei das Abkühlen mittels Umwickeln des beschichteten Werkstücks mit Wolle erfolgt.

7. Verfahren nach Anspruch 5 oder 6, wobei dem Abkühlschritt ein Schritt folgt: Schleifen des beschichteten Werkstücks.

8. Verfahren nach den Ansprüchen 1-7, wobei das Aufheizen mittels WIG-Schweißen, Plasmaschweißen oder Gasschweißen erfolgt.

9. Verfahren nach den Ansprüchen 1-8, wobei der Hartmetallstab etwa 80% Wolfram und etwa 20% Kobalt enthält, wodurch ein Härtegrad von mindestens 900 HV erzielt wird.

10. Verfahren nach Anspruch 9, wobei ein Härtegrad von mindestens 950 HV, bevorzugt mindestens 975 HV und weiter bevorzugt mindestens 1000 HV erzielt wird.

## Revendications

1. Procédé de revêtement d'une portion d'une pièce en alliage métallique, contenant du carbone, avec un carbure,
**caractérisé par** les étapes
a) d'application d'une tige de carbure, contenant du carbure de tungstène, sur la pièce, dans laquelle la tige de carbure est une ébauche de foret ou de fraise; et
b) de chauffage de ladite tige de carbure à une température de 1300-1800 °C pour se transformer en partie avec la pièce, obtenant une couche de transformation et une couche superficielle, où la couche superficielle contient substantiellement le tungstène et la couche de transformation contient substantiellement un alliage métallique et le tungstène.

2. Procédé selon la revendication 1, dans lequel ledit carbure est chauffé à une température de 1400-1700 °C, et, de préférence, à une température de 1500-1600 °C.

3. Procédé selon la revendication 1 ou 2, dans lequel l'étape d'application est précédée par une étape de chauffage préalable de la pièce à une température de 50-500 °C.

4. Procédé selon la revendication 3, dans lequel ladite pièce est chauffée à une température de 100-350 °C, et, de préférence, à une température de 200-250 °C.

5. Procédé selon l'une quelconque des revendications 1-4, dans lequel ladite étape de chauffage est suivie d'une étape de refroidissement de la pièce revêtue.

6. Procédé selon la revendication 5, dans lequel le refroidissement est effectué en enveloppant la pièce revêtue dans de la laine.

7. Procédé selon la revendication 5 ou 6, dans lequel ladite étape de refroidissement est suivie par une étape de rectification de la pièce revêtue.

8. Procédé selon l'une quelconque des revendications 1-7, dans lequel le chauffage est obtenu par une soudure TIG, une soudure au plasma ou une soudure au gaz.

9. Procédé selon l'une quelconque des revendications 1-8, dans lequel la tige de carbure contient environ 80% de tungstène et environ 20% de cobalt, un degré de dureté d'au moins 900 HV étant obtenu.

10. Procédé selon la revendication 9, dans lequel un degré de dureté d'au moins 950 HV est obtenu, de préférence, d'au moins 975 HV, et, plus préférablement, d'au moins 1000 HV.
